# EUROPEAN PATENT SPECIFICATION

(11) **EP 3 771 000 B1**
(45) Date of publication and mention of the grant of the patent: **28.08.2024**
(21) Application number: 19771288.8
(22) Date of filing: 20.03.2019
(51) Int. Cl.: H01M 4/525, H01M 4/36, H01M 4/505, H01M 4/04, H01M 4/1391, H01M 4/62

(54) **POSITIVE ELECTRODE ACTIVE MATERIAL FOR NONAQUEOUS ELECTROLYTE SECONDARY BATTERIES AND METHOD FOR PRODUCING SAME**
POSITIVES ELEKTRODENAKTIVMATERIAL FÜR SEKUNDÄRBATTERIEN MIT WASSERFREIEM ELEKTROLYT UND VERFAHREN ZUR HERSTELLUNG DAVON
MATÉRIAU ACTIF D'ÉLECTRODE POSITIVE POUR ACCUMULATEURS À ÉLECTROLYTE NON AQUEUX ET SON PROCÉDÉ DE PRODUCTION

(30) Priority: 20.03.2018 JP 2018052908; 20.03.2018 JP 2018052909
(43) Date of publication of application: 27.01.2021
(73) Proprietor: SUMITOMO METAL MINING CO., LTD., Tokyo 105-8716 (JP)
(72) Inventor: OTSUKA, Yoshihiro, Niihama-shi, Ehime 792-0002 (JP); RYOSHI, Kazuomi, Niihama-shi, Ehime 792-0002 (JP); OSHITA Hiroko, Niihama-shi, Ehime 792-0002 (JP); OZAWA, Shuuzou, Niihama-shi, Ehime 792-0002 (JP)
(74) Representative: Müller-Boré & Partner Patentanwälte PartG mbB
(86) International application number: PCT/JP2019/011883
(87) International publication number: WO 2019/182064

(56) References cited:
- CN-A- 103 855 387
- CN-A- 107 768 631
- JP-A- 2011 096 650
- JP-A- 2016 024 968
- JP-A- 2016 072 071
- JP-A- 2016 143 490

## Description

### Technical Field

The present invention relates to a positive electrode active material for non-aqueous electrolyte secondary batteries and a method for producing the same.

### Background Art

In recent years, with widespread use of a portable information terminal such as a smartphone or a tablet PC, development of a small and lightweight secondary battery having high energy density has been desired. In addition, development of a secondary battery having high output has also been desired as a battery for an electric car including a hybrid car. As a secondary battery satisfying such requirement, there is a non-aqueous electrolyte secondary battery such as a lithium ion secondary battery. The lithium ion secondary battery includes a negative electrode, a positive electrode, an electrolyte solution, and the like. As an active material of each of the negative electrode and the positive electrode, a material capable of desorbing and inserting lithium is used.

Non-aqueous electrolyte secondary batteries are currently under active research and development. Among the non-aqueous electrolyte secondary batteries, a non-aqueous electrolyte secondary battery using a lithium-metal composite oxide having a layered structure or a spinel structure as a positive electrode active material can provide a high voltage at a level of 4 V and is therefore put to practical use as a battery having high energy density. Examples of a positive electrode active material that has been proposed mainly so far include lithium-cobalt composite oxide (LiCoO₂) which is relatively easily synthesized, lithium-nickel composite oxide (LiNiO₂) and lithium-nickel-cobalt-manganese composite oxide (LiNi_{1/3}Co_{1/3}Mn_{1/3}O₂) using nickel which is cheaper than cobalt, and a lithium-manganese composite oxide (LiMn₂O₄) using manganese.

Among these compounds, the lithium-cobalt composite oxide uses an expensive cobalt compound as a raw material. Therefore, a unit price per capacity of a battery is significantly higher than that of a conventional nickel-metal hydride battery, and applications to which the battery is applicable are considerably limited. Not only for a small secondary battery but also for a large secondary battery used for an electric car or power storage, there is large expectation to reduce cost of a positive electrode active material, and to make it possible to produce a cheaper non-aqueous electrolyte secondary battery. Achievement thereof has a large industrial significance.

Examples of a candidate for a positive electrode active material for non-aqueous electrolyte secondary batteries cheaper and applicable to a wider range of applications include lithium-nickel composite oxide using nickel cheaper than cobalt. The lithium-nickel composite oxide exhibits a high battery voltage like the lithium-cobalt composite oxide, but exhibits a lower electrochemical potential than the lithium-cobalt composite oxide. Therefore, in the lithium-nickel composite oxide, a problem of decomposition due to oxidation of an electrolyte solution hardly occurs, higher capacity can be expected, and development is actively performed particularly for an electric car.

However, even in an electric car equipped with a secondary battery produced using conventional lithium-nickel composite oxide (for example, see Patent Literature 1), it is difficult to achieve a cruising range comparable to that of a gasoline car, and capacity enlargement is required.

Meanwhile, the lithium-nickel composite oxide has a problem that gelation of a positive electrode mixture paste is likely to occur. A positive electrode of a non-aqueous electrolyte secondary battery is formed, for example, by mixing a positive electrode active material with a binder such as polyvinylidene fluoride (PVDF) and a solvent such as N-methyl-2-pyrrolidone (NMP) to produce a positive electrode mixture paste, applying the positive electrode mixture paste to a current collector such as an aluminum foil, and then drying and pressure-bonding the positive electrode mixture paste. At this time, when lithium is desorbed from the positive electrode active material in the positive electrode mixture paste, lithium may react with water contained in the paste to increase the pH of the paste. Due to this increase in pH, the binder or the solvent in the positive electrode mixture paste may be polymerized, and the positive electrode mixture paste may be gelled. When the positive electrode mixture paste is gelled, coatability on a current collector is deteriorated, and a yield in battery production is deteriorated. This tendency is particularly noticeable when the content of lithium contained in the lithium-nickel composite oxide, in particular, the content of lithium contained in the positive electrode active material is excessive than a stoichiometric composition of the lithium-nickel composite oxide, and the ratio of nickel in a transition metal other than lithium is high.

Some attempts have been made to suppress such gelation of the positive electrode mixture paste. For example, Patent Literature 2 proposes a positive electrode composition for secondary batteries, containing a positive electrode active material formed of a lithium-transition metal composite oxide and an additive formed of acidic oxide particles. According to Patent Literature 2, when a positive electrode is produced using the positive electrode composition, lithium desorbed from the positive electrode active material reacts with water contained in a binder to generate lithium hydroxide, and the generated lithium hydroxide causes a neutralization reaction with the acidic oxide particles to suppress an increase in pH of the positive electrode mixture paste and gelation. The acidic oxide plays a role as a conductive agent in the positive electrode, lowers resistance of the whole positive electrode, and also contributes to improvement in output characteristics of a battery.

Patent Literature 3 proposes a method for producing a non-aqueous electrolyte secondary battery, in which the amount of excessive lithium hydroxide with respect to the stoichiometric composition of lithium-transition metal composite oxide is calculated, and 0.05 mol or more of tungsten oxide per mol of the excessive lithium hydroxide is mixed with a positive electrode active material, a conduction aid, and a binding agent to form a positive electrode mixture paste, thereby obtaining a secondary battery having high battery characteristics while suppressing gelation.

Patent Literature 4 discloses a technique for preventing gelation of an electrode paste by inclusion of boric acid or the like as an inorganic acid in a positive electrode using lithium-transition metal composite oxide or the like, and discloses lithium nickelate as a specific example of the lithium-transition metal composite oxide.

Patent Literatures 5 to 7 propose a positive electrode active material including lithium-nickel composite oxide particles and a coating layer formed of fine particles of titanium oxide, the positive electrode active material being obtained by mixing the lithium-nickel composite oxide particles with a coating solution containing an organic titanium compound having an alkoxy group. According to Patent Literatures 5 to 7, this positive electrode active material can suppress gelation of a paste-like composition for forming a positive electrode mixture layer without impairing battery performance originally possessed by the positive electrode active material.

### Citation List

### Patent Literature

Patent Literature 1: JP 05-242891 A
Patent Literature 2: JP 2012-28313 A
Patent Literature 3: JP 2013-84395 A
Patent Literature 4: JP 10-79244 A
Patent Literature 5: JP 2016-024968 A
Patent Literature 6: JP 2016-072071 A
Patent Literature 7: JP 2016-143490 A

### Summary of Invention

### Technical Problem

However, in the proposals of Patent Literatures 2 and 3, acidic oxide particles remain, and as a result, a separator may be damaged, and thermal stability may be thereby lowered. By increasing the addition amount of the acidic oxide or tungsten, it is possible to improve suppression of gelation of the positive electrode mixture paste. However, by an increase in raw material cost due to addition thereof and an increase in the weight of a positive electrode composition, battery capacity per unit weight decreases. In the proposal of Patent Literature 4, a positive electrode active material, a conductive agent, and a binding agent are added to a solvent to which boric acid or the like is added and stirred and mixed. However, in this method, gelation may occur locally before the positive electrode active material is sufficiently dispersed. In the above Patent Literatures 2 to 4, it cannot be said that gelation of a positive electrode mixture paste is sufficiently suppressed.

As in Patent Literatures 5 to 7, in a secondary battery using lithium-nickel composite oxide having a surface coated with a layer containing a different element, battery characteristics such as battery capacity (for example, initial discharge capacity) may deteriorate. In a lithium-nickel composite oxide having a high nickel content, gelation of a positive electrode mixture paste tends to occur. Here, in order to sufficiently suppress the gelation of the positive electrode mixture paste using the techniques of Patent Literatures 5 to 7, it is conceivable to add a larger amount of titanium compound. However, this may decrease battery capacity to impair inherent characteristic of the lithium-nickel composite oxide that the lithium-nickel composite oxide has high battery capacity.

The present invention has been achieved in view of these circumstances. An object of the present invention is to provide a positive electrode active material containing lithium-nickel composite oxide, the positive electrode active material achieving both higher battery capacity and suppression of gelation of a positive electrode mixture paste at the time of battery production at a high level. Another object of the present invention is to provide a method capable of producing such a positive electrode active material easily in industrial scale production.

In view of the above problems, an object of the present invention is to provide a positive electrode active material capable of suppressing gelation of a positive electrode mixture paste and producing a non-aqueous electrolyte secondary battery having high capacity.

### Solution to Problem

A first aspect of the present invention provides a positive electrode active material for non-aqueous electrolyte secondary batteries according to appended claim 1.

A second aspect of the present invention provides a method for producing a positive electrode active material for non-aqueous electrolyte secondary batteries according to appended claim 6.

A third aspect of the present invention provides a lithium ion secondary battery including a positive electrode, a negative electrode, and a non-aqueous electrolyte, in which the positive electrode contains the positive electrode active material according to any one of claims 1 to 5.

### Advantageous Effects of Invention

According to the present invention, in a positive electrode active material containing a lithium-nickel composite oxide, both higher battery capacity and suppression of gelation of a positive electrode mixture paste at the time of battery production can be achieved at a high level. In addition, according to a method for producing a positive electrode active material according to the present invention, the above positive electrode active material can be easily produced on an industrial scale, and an industrial value thereof is extremely large.

### Brief Description of Drawings

Fig. 1(A) is a diagram illustrating an example of a positive electrode active material according to the present embodiment, and Fig. 1(B) is a diagram illustrating an example of a structure of a lithium-metal composite oxide.
Fig. 2 is a diagram illustrating an example of a method for producing a positive electrode active material according to the present embodiment.
Fig. 3 is a diagram illustrating another example of the method for producing a positive electrode active material according to the present embodiment.
Figs. 4(A) and 3(B) are diagrams illustrating an example of a method for producing a material used in a mixing process.
Figs. 5(A) and 5(B) are diagrams illustrating an example of a method for producing a coating solution used in an attaching process.
Fig. 6 is a diagram illustrating another example of a method for producing a lithium-metal composite oxide.
Fig. 7 is a schematic cross sectional view of a coin type battery CBA for evaluation.

### Description of Embodiments

### 1. Positive electrode active material for non-aqueous electrolyte secondary batteries

The present inventors made intensive studies on a lithium-nickel metal composite oxide used as a positive electrode active material. As a result, the present inventors have found that in a lithium-nickel composite oxide particle containing boron therein, by forming a titanium compound-containing coating layer on a surface of the lithium-nickel composite oxide particle, gelation of a positive electrode mixture paste is suppressed, and a secondary battery having improved battery capacity can be obtained, and have completed the present invention. Hereinafter, a configuration of a positive electrode active material according to the present embodiment will be described in detail.

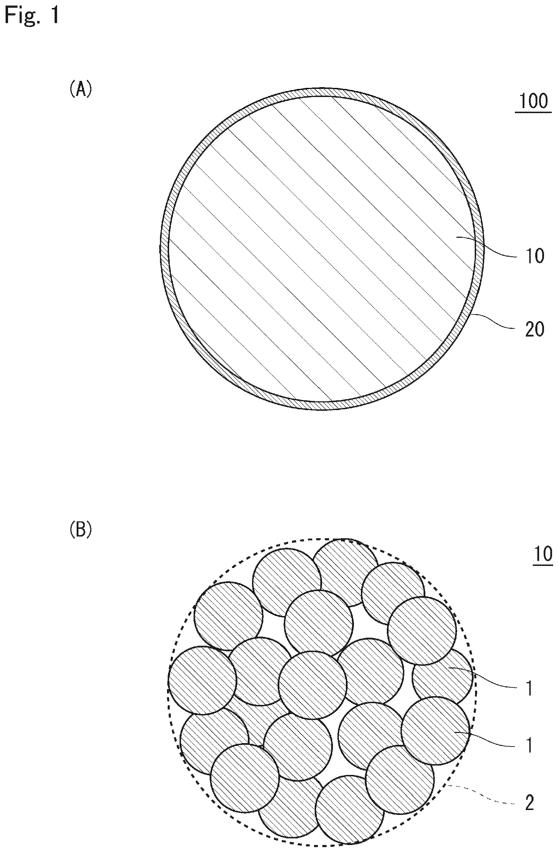

Fig. 1(A) is a diagram illustrating the positive electrode active material for non-aqueous electrolyte secondary batteries according to the present embodiment (hereinafter, also referred to as "positive electrode active material 100"). As illustrated in Fig. 1(A), the positive electrode active material 100 includes a lithium-nickel composite oxide particle 10 and a titanium compound-containing coating layer 20 attached to at least a part of a surface of the particle. Boron is contained inside the lithium-nickel composite oxide particle 10.

Fig. 1(B) is a diagram illustrating an example of a structure of the lithium-nickel composite oxide particle 10. The lithium-nickel composite oxide particle 10 is a particle of an oxide containing lithium and nickel, and includes a secondary particle 2 formed of a plurality of primary particles 1 as illustrated in Fig. 1(B). The lithium-nickel composite oxide particle 10 in the positive electrode active material 100 is mainly formed of the secondary particles 2, but may include a small amount of the individual primary particles 1 in addition to the secondary particles 2.

### (Composition of lithium-nickel composite oxide particle)

The lithium-nickel composite oxide particle 10 may contain only nickel as a metal component other than lithium, but may contain an element other than nickel, and preferably contains another metal element. Examples of the metal element include Co, Mn, V, Mg, Mo, Nb, Ti, and Al, and the lithium-nickel composite oxide particle 10 can contain various known metal elements depending on required characteristics. For example, the lithium-nickel composite oxide particle 10 preferably contains cobalt from a viewpoint of improving cycle characteristics and thermal stability during charging.

The lithium-nickel composite oxide particle 10 preferably has a layered crystal structure, and preferably has a crystal structure in which a part of nickel is replaced with an arbitrary metal including cobalt. In addition, the lithium-nickel composite oxide particle 10 contains boron, and at least a part of boron is preferably solid-solved. The lithium-nickel composite oxide particle 10 preferably has a crystal structure in which a part of nickel is replaced with boron.

When the lithium-nickel composite oxide particle 10 contains nickel and cobalt as metal elements other than lithium, for example, an atomic number ratio among lithium (Li), nickel (Ni), cobalt (Co), and an element M may be represented by Li : Ni : Co : M = s : (1 - x - y) : x : y (in which 0.95 ≤ s ≤ 1.30, 0.05 ≤ x ≤ 0.35, 0 ≤ y ≤ 0.1, M represents at least one element selected from the group consisting of Mn, V, Mg, Mo, Nb, Ti, and Al). Note that the nickel compound represented by the above atomic number ratio may contain a small amount of an element other than the element M.

### (Lithium)

In the above atomic number ratio, s indicating the content of lithium is preferably 0.95 or more and 1.30 or less, and more preferably 1.0 or more and 1.10 or less. When the atomic number ratio of lithium is less than 0.95, a site which should be occupied by lithium in the crystal of the lithium-nickel composite oxide is occupied by another element, and charge and discharge capacity may decrease. Meanwhile, when the atomic number ratio exceeds 1.30, an excessive amount of a lithium compound that does not contribute to charge and discharge is present together with the lithium-nickel composite oxide, which may increase battery resistance or may decrease charge and discharge capacity.

### (Nickel)

In the above atomic number ratio, (1 - x - y) indicating the content of nickel is 0.55 or more and 0.95 or less. The content of nickel is preferably as high as possible within the above range from a viewpoint of improving battery capacity in the secondary battery, and may be, for example, 0.6 or more, 0.7 or more, 0.8 or more, or 0.85 or more. Meanwhile, when the content of nickel is high, gelation of the positive electrode mixture paste is likely to occur. However, the positive electrode active material 100 according to the present embodiment includes the titanium compound-containing coating layer 20, and contains boron inside the lithium-nickel composite oxide particle 10. Therefore, the positive electrode active material 100 can improve charge and discharge capacity (battery capacity) and can suppress gelation of the positive electrode mixture paste sufficiently even when the content of nickel is high.

### (Cobalt)

In the above atomic number ratio, x indicating the content of cobalt is preferably 0.05 or more and 0.35 or less. When the atomic number ratio of cobalt is within the above range, cycle characteristics when charge and discharge are repeated and thermal stability during charging can be improved while high charge and discharge capacity of the lithium-nickel composite oxide are maintained.

### (Element M)

In the above atomic number ratio, the element M is Mn, V, Mg, Mo, Nb, Ti, or Al, and y indicating the content of the element M is preferably 0 or more and 0.1 or less. Note that when the element M is included (when M exceeds 0), the characteristics can be improved in various ways such as improvement in cycle characteristics and thermal stability, improvement in rate characteristics, and a decrease in battery resistance depending on the type of an element to be added. Meanwhile, when the atomic number ratio of the element M exceeds 0.10, the content ratio of nickel in the lithium-nickel composite oxide particle 10 decreases, and charge and discharge capacity tends to decrease. In addition, the element M may contain Al. When the content of Al is represented by y1, and the content of the element M other than Al is represented by y2 in the above atomic number ratio, a value of y1 is 0.01 or more and 0.1 or less (in which y = y1 + y2).

### (Boron)

The lithium-nickel composite oxide particle 10 contains boron (B) therein. In the lithium-nickel composite oxide particle 10, at least a part of boron is preferably solid-solved in the crystal structure. The solid solution in the crystal structure and the presence of a boron compound can be confirmed by powder X-ray diffraction or the like. For example, when the lithium-nickel composite oxide contains boron and a boron compound is not detected as a different phase by powder X-ray diffraction, it is assumed that boron is solid-solved. Note that when boron is solid-solved in the crystal structure, it is conceivable that a part of nickel is replaced with boron. Note that a part of boron may be present as a compound containing boron on a surface of the primary particle 1 and/or the secondary particle 2 or on a crystal grain boundary, but is preferably solid-solved in the crystal structure from a viewpoint of improving charge and discharge capacity in the secondary battery.

When boron is solid-solved in the crystal structure of the lithium-nickel composite oxide particle 10, the charge and discharge capacity of the positive electrode active material 100 can be improved. Details of this mechanism are unclear, but are presumed as follows, for example. As described above, the lithium-nickel composite oxide particle 10 includes the secondary particle 2 in which the primary particles 1 formed of fine single crystals are aggregated. For example, a surface between the single crystals or a surface between the primary particles 1 (boundary surface) is a crystalline discontinuous surface even when there is no clear void, and therefore prevents movement of lithium ions when charging and discharging. The presence of this boundary surface is one of factors to increase the battery resistance of the secondary battery, mainly the positive electrode resistance thereof to decrease the charge and discharge capacity. When the secondary particles 2 having the same size are compared with each other, it can be said that the total area of this boundary surface is smaller as the sizes of the single crystal and the primary particle 1 are larger. Here, when a part of the transition metal (nickel) is replaced with boron, crystal growth is likely to proceed. Therefore, it is conceivable that the single crystal and the primary particle become large to improve the charge and discharge capacity of the positive electrode active material 100. By combining the titanium compound-containing coating layer 20 with the niobium-containing lithium-nickel composite oxide particle 10, the amount of eluted Li can be further reduced, although details thereof are unclear.

The content of boron is not particularly limited as long as the above effect is exhibited, but may be 0.002% by mass or more and 0.15% by mass or less in materials not being part of the invention. In the present invention, the content of boron is 0.005% by mass or more and 0.1% by mass or less, and may be 0.01% by mass or more and 0.05% by mass or less with respect to the whole positive electrode active material. Note that when the content of boron is too small, the above effects are not necessarily exhibited sufficiently. When the content of boron is excessively large, the ratio of nickel to metals other than lithium decreases, and the ratio of nickel in the positive electrode active material 100 decreases. Therefore, the charge and discharge capacity may decrease. When the content of boron is high, the ratio of boron present as a boron-containing compound on a surface of the primary particle 1 and/or the secondary particle 2 or on a crystal grain boundary is high, and the battery capacity may decrease.

The lithium-nickel composite oxide particle 10 may be represented by general formula (1): LiₐNi_{1-x-y}CoₓM_{y}O_{2+α} (in which 0.05 ≤ x ≤ 0.35, 0 ≤ y ≤ 0.10, 0.95 ≤ a ≤ 1.10, -0.5 < α < 0.5, M represents at least one element selected from the group consisting of B, Mn, V, Mg, Mo, Nb, Ti, and Al) as a composition formula excluding boron. A preferable range of each of the elements in the above general formula (1) is similar to that of the above atomic number ratio.

### (Coating layer)

The positive electrode active material 100 includes the titanium compound-containing coating layer 20 attached to at least a part of a surface of the above-described lithium-nickel composite oxide particle 10. When a surface of the lithium-nickel composite oxide particle 10 is coated with the titanium compound-containing coating layer 20, gelation of the positive electrode mixture slurry can be extremely suppressed. Note that the titanium compound is a compound containing titanium and may be an oxide containing titanium.

Generally, a positive electrode mixture slurry is prepared by kneading a positive electrode active material such as lithium-nickel composite oxide, a conduction aid such as acetylene black, a binding agent such as PVDF, and other additives together with a solvent such as N-methylpyrrolidone. This positive electrode mixture slurry is applied to a current collector (for example, an aluminum thin plate), then dried, and pressed if necessary to produce a positive electrode. During the production of the positive electrode, the viscosity of the positive electrode mixture slurry may increase with a passage of time to make it difficult to apply the positive electrode mixture slurry to the current collector. Details of this reason are unclear. However, it is conceivable that this is because lithium ions are eluted from the lithium-transition metal composite oxide particle 10 into the solvent, the pH of the positive electrode mixture slurry is increased, and a part of the solvent is polymerized to cause gelation.

Meanwhile, in the positive electrode active material 100 of the present embodiment, by the presence of the titanium compound-containing coating layer 20 on a surface of the lithium-nickel composite oxide particle 10, it is conceivable that elution of lithium ions into the positive electrode mixture slurry is suppressed, the pH of the positive electrode mixture slurry is unlikely to increase, and gelation is suppressed. When the coating layer 20 contains a titanium compound, a lithium elution suppressing effect is large, and conductivity of lithium ions can be ensured during a charge and discharge reaction. Therefore, high charge and discharge capacity can be maintained while gelation of the positive electrode mixture slurry is suppressed.

The titanium compound-containing coating layer 20 is preferably attached to at least a part of a contact surface between the lithium-nickel composite oxide particle 10 and an electrolyte solution constituting the secondary battery (for example, a surface of the secondary particle 2 or a surface of the primary particle 1 in contact with a void inside the secondary particle 2). The content of titanium contained in the coating layer 20 is preferably 0.01% by mass or more and 0.15% by mass or less, more preferably 0.01% by mass or more and 0.10% by mass or less, and may be 0.01% by mass or more and 0.05% by mass or less with respect to the whole positive electrode active material. When the content of titanium is less than 0.01% by mass, a surface of the lithium-nickel composite oxide particle 10 is not sufficiently coated with the coating layer 20, and lithium ions are eluted from a partially exposed surface of the lithium-nickel composite oxide particle 10. A sufficient gelation suppressing effect is not necessarily obtained. Meanwhile, when the content of titanium exceeds 0.15% by mass, the thickness of the coating layer 20 is large, and a gelation suppressing effect can be obtained. However, positive electrode resistance when charging and discharging is large, the battery resistance of the secondary battery increases, and charge and discharge capacity may decrease.

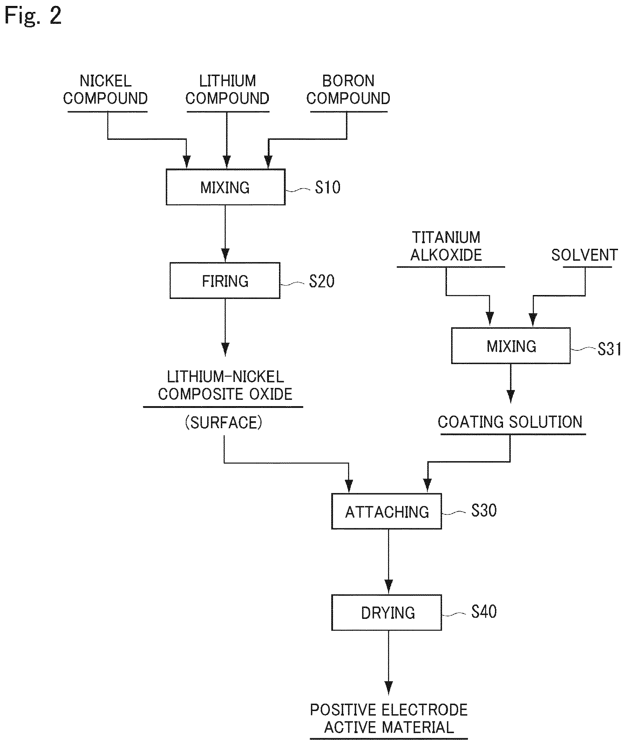

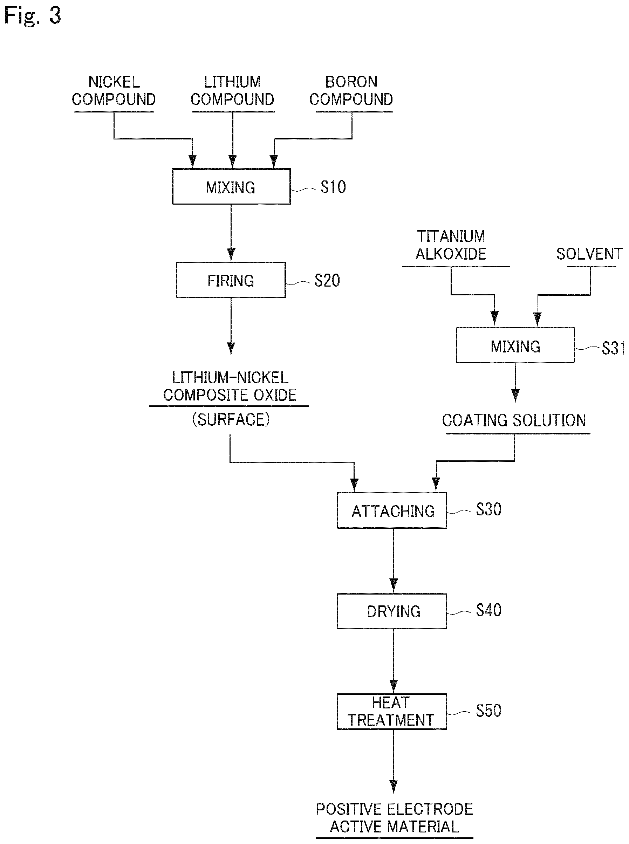

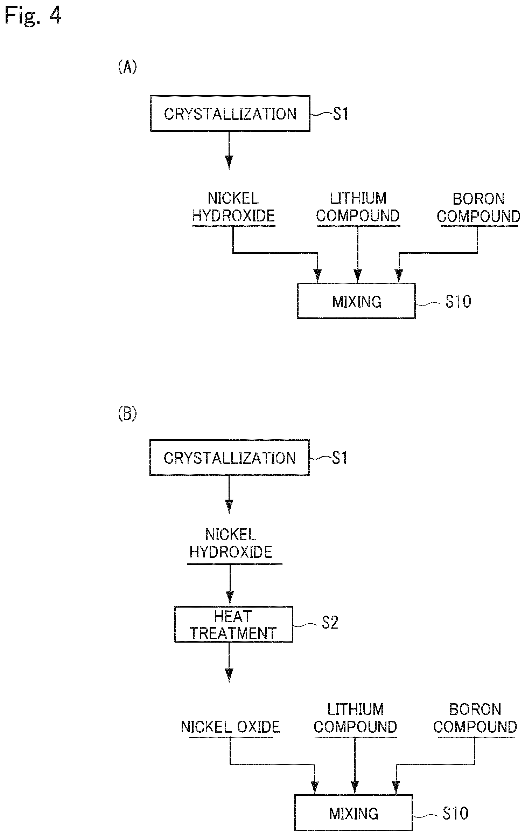

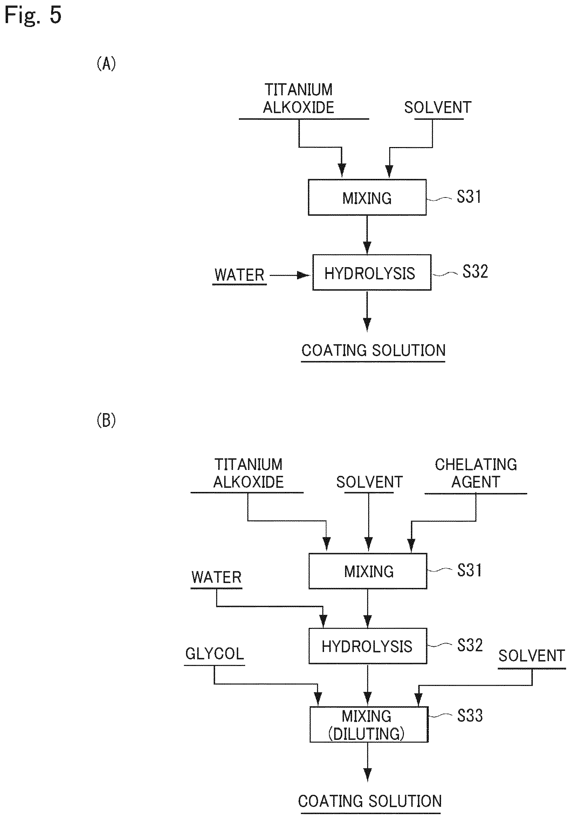

The titanium compound contained in the coating layer 20 is preferably a hydrolysis product of a titanium alkoxide, and may be an oxide containing titanium. A surface of the lithium-nickel composite oxide is preferably coated with the titanium compound by a method capable of easily and uniformly coating the whole surface. As described later, when a solution containing a titanium alkoxide is used as the coating solution, a compound containing titanium is easily spread on a surfaces of the secondary particle uniformly and thoroughly. The coating solution containing a titanium alkoxide becomes a solid-phase titanium compound by hydrolysis (see step S32 in Fig. 5(A)) or thermal decomposition. The lithium-nickel composite oxide particle 10 is coated with the coating solution, and then dried (see step S40 in Figs. 2 and 3) or heat treated (see step S50 in Fig. 4) to obtain the lithium-nickel composite oxide particle 10 to which the titanium compound-containing coating layer 20 is attached.

### (Amount of eluted lithium)

The amount of lithium eluted (amount of eluted lithium) when the positive electrode active material 100 is immersed in water is 0.05% by mass or more and 0.25% by mass or less, and preferably 0.05% by mass or more and 0.15% by mass or less with respect to the whole positive electrode active material 100. When the amount of eluted lithium is within the above range, gelation of the positive electrode mixture paste using the positive electrode active material 100 is extremely suppressed, and initial charge and discharge capacity is sufficient. Note that as for the amount of eluted lithium, 15 g of the positive electrode active material was stirred and dispersed in 75 ml of pure water, then the resulting mixture was allowed to stand for 10 minutes, 10 ml of the supernatant was diluted with 50 ml of pure water, the amount of lithium in the supernatant was measured by a neutralization titration method, and the amount of eluted lithium (% by mass) with respect to the whole positive electrode active material was calculated.

Note that a method for producing the positive electrode active material 100 is not particularly limited as long as the positive electrode active material 100 has the above characteristics, but the positive electrode active material 100 can be easily produced by a producing method described below.

### 2. Method for producing positive electrode active material

Figs. 2 and 3 are diagrams illustrating an example of a method for producing a positive electrode active material for non-aqueous electrolyte secondary batteries according to the present embodiment (hereinafter, also referred to as "method for producing a positive electrode active material"). By the method for producing a positive electrode active material according to the present embodiment, it is possible to easily produce the above-described positive electrode active material 100 with high productivity. Note that the producing method of the present embodiment may produce a positive electrode active material other than the positive electrode active material 100. Hereinafter, the method for producing a positive electrode active material according to the present embodiment will be described.

### [Mixing process (step S10)]

First, a nickel compound, a boron compound, and a lithium compound are mixed (step S10). The mixture obtained in this process (step S20) is fired to obtain a lithium-metal composite oxide. The materials used in this process will be described below.

### (Nickel compound)

As the nickel compound, a known compound can be used as long as containing nickel. The nickel compound may contain an element other than nickel, and preferably contains a metal element. Examples of the metal element include Co, Mn, V, Mg, Mo, Nb, Ti, and Al, and the nickel compound can contain various metal elements depending on required characteristics. The nickel compound preferably contains Co, for example, from a viewpoint of improving cycle characteristics and thermal stability during charging.

The nickel compound may have a similar composition to the composition of the above-described lithium-nickel composite oxide particle 10 excluding lithium. In the nickel compound, for example, an atomic number ratio among nickel (Ni), cobalt (Co), and an element M may be represented by Ni : Co : M = (1 - x - y): x : y (in which 0.05 ≤ x ≤ 0.35, 0 ≤ y ≤ 0.35, M represents at least one element selected from the group consisting of Mn, V, Mg, Mo, Nb, Ti, and Al). Note that a preferable range of the atomic number ratio of each metal is similar to the above-described range, and therefore description thereof is omitted.

In addition, the nickel compound may be a hydroxide containing nickel (nickel hydroxide), an oxide containing nickel (nickel oxide), a carbonate containing nickel (nickel carbonate), a sulfate containing nickel, a chloride containing nickel, and the like. Among these compounds, the nickel compound is preferably at least one selected from the group consisting of nickel hydroxide, nickel oxide, and nickel carbonate, and more preferably at least one selected from the group consisting of nickel hydroxide and nickel oxide from a viewpoint of reactivity with a lithium compound and not containing an anion as impurities. For example, when nickel oxide is used as the nickel compound, it is possible to reduce variations in the composition of an obtained positive electrode active material, and in the obtained positive electrode active material, boron derived from a boron compound is solid-solved in the primary particle and can be uniformly distributed in the whole secondary particles. Note that the nickel compounds may be used singly or in combination of two or more kinds thereof.

Note that a method for producing the nickel compound is not particularly limited as long as the nickel compound has the above composition, and can be a known method. Figs. 4(A) and 4(B) are diagrams illustrating an example of a method for producing a material used in a mixing process (step S10). As the nickel compound, for example, as illustrated in Fig. 4 (A), nickel hydroxide produced by crystallization (step S1) using an aqueous solution containing Ni and optionally Co and the element M may be used. In addition, as for the nickel compound, for example, as illustrated in Fig. 4 (B), nickel oxide obtained by heat treating (step S2) the nickel hydroxide obtained after crystallization (step S1) may be used as at least a part of the nickel compound. When a positive electrode active material is produced using the precursor (nickel hydroxide/nickel oxide) obtained by crystallization (step S1), it is possible to obtain a positive electrode active material in which particles have more uniform compositions and physical properties among the particles.

When nickel hydroxide is heat treated (step S2), the temperature of the heat treatment can be, for example, 105°C or higher and 750°C or lower, and is preferably 400°C or higher when the whole amount of the nickel hydroxide is converted to nickel oxide. The heat treatment time is not particularly limited, but for example, one hour or more, and preferably five hours or more and 15 hours or less. The atmosphere in which the heat treatment is performed is not particularly limited and only needs to be a nonreducing atmosphere. The heat treatment may be performed in an air flow in which the heat treatment can be simply performed.

### (Lithium compound)

As the lithium compound, a known compound can be used as long as containing lithium. As the lithium compound, lithium hydroxide, lithium oxide, and lithium carbonate are preferable, and lithium hydroxide is more preferable from a viewpoint of reactivity with a nickel compound and reduction of impurities.

For example, when nickel oxide (NiO) and lithium hydroxide (LiOH) are mixed and caused to react with each other at 700°C or higher and 800°C or lower, a lithium-nickel composite oxide is generated by a reaction of the following formula (1).

Formula (1): NiO + LiOH + 1/4O₂ → LiNiO₂ + 1/2H₂O

As described above, note that nickel oxide may contain another metal element such as cobalt or the element M, and may contain boron (B) as described later. When nickel oxide is used as a material used in the mixing process (step S10), boron can be easily solid-solved in the lithium-nickel composite oxide in a subsequent firing process (step S20).

### (Boron compound)

The boron compound is a compound containing boron and can be a known compound. The boron compound is preferably at least one selected from the group consisting of boric acid (H₃BO₃), boron oxide (B₂O₃) , and lithium metaborate (LiBO₂), and more preferably at least one selected from the group consisting of boric acid and boron oxide from viewpoints of easy availability and reduction of impurities. Note that the boron compounds may be used singly or in combination of two or more kinds thereof.

### (Mixing method)

It is preferable to sufficiently mix the nickel compound, the lithium compound, and the niobium compound to such an extent that fine powders are not generated. When mixing is insufficient, Li/Me varies among individual particles of the obtained positive electrode active material and sufficient battery characteristics cannot be attained in some cases. Note that a general mixer can be used for mixing. For example, a shaker mixer, a Lodige mixer, a Julia mixer, or a V blender can be used as the mixer.

### [Firing process (step S20)]

Subsequently, the mixture obtained by the above mixing process (step S10) is fired (step S20). By firing the nickel compound and the lithium compound together with the boron compound, a lithium-nickel composite oxide containing the boron compound can be obtained. At least a part of boron is preferably solid-solved in the lithium-nickel composite oxide particle.

The firing temperature is preferably 700°C or higher and 800°C or lower. When the firing temperature is lower than 700°C, the rate of the firing reaction is low, which may be industrially disadvantageous. When the firing temperature exceeds 800°C, the generated lithium-nickel composite oxide causes a decomposition reaction, the yield of the lithium-nickel composite oxide is reduced, and excessive crystal growth occurs, which may deteriorate battery characteristics, particularly cycle characteristics.

The firing time is not particularly limited as long as the firing reaction is sufficiently performed, but is, for example, three hours or more and 20 hours or less, and preferably five hours or more and 10 hours. The atmosphere when firing is preferably an oxygen atmosphere, and may be an atmosphere having an oxygen concentration of 100% by volume.

### [Attaching process (step S30)]

Subsequently, the coating solution obtained by dissolving a titanium alkoxide in a solvent is attached to a surface of the lithium-nickel composite oxide particle obtained by firing (attaching process: step S30). A method for producing the coating solution and a method for attaching the coating solution are not particularly limited, and can be known methods. However, the following methods are preferable.

### (Coating solution)

The coating solution is obtained by mixing a titanium alkoxide and a solvent (Figs. 2 and 3, step S31). The titanium alkoxide is preferably at least one selected from the group consisting of titanium tetraethoxide (Ti (OC₂H₅) ₄) , titanium tetrapropoxide (Ti(OC₃H₇)₄), and titanium tetrabutoxide (Ti(OC₄Hg)₄). Note that the titanium alkoxides may be used singly or in combination of two or more kinds thereof. When these titanium alkoxides are used, these titanium alkoxides are composed only of titanium, oxygen, carbon, and hydrogen. Therefore, when a coating film (coating layer) containing a titanium compound is formed on a surface of the lithium-nickel composite oxide particle, formation of anions that hinder a charge and discharge reaction in the secondary battery is suppressed. In addition, these titanium alkoxides are soluble in various organic solvents, and therefore make it easy to prepare the coating solution.

The solvent used for preparing the coating solution is not particularly limited, and can be a known solvent capable of dissolving a titanium alkoxide. However, a lower alcohol having 4 or less carbon atoms is preferable from a viewpoint of easy preparation or the like. Examples of the lower alcohol include n-propyl alcohol, isopropyl alcohol, and tetrabutyl alcohol. When a lower alcohol is used, the coating solution can be easily applied to a surface of the lithium-nickel composite oxide particle due to high solubility for the alkoxide and low viscosity. Note that when a higher alcohol is used, it may be difficult to spray the coating solution due to high viscosity.

By adding an organic solvent other than an alcohol, such as acetylacetone, the viscosity of the solution can be adjusted to obtain a titanium compound solution suitable for spraying. Note that acetylacetone can chelate (modify) some of alkoxy groups of the titanium alkoxide to adjust a hydrolysis rate.

Figs. 5(A) and 5(B) are diagrams illustrating an example of a method for preparing the coating solution. As illustrated in Fig. 5(A), after the solvent and the titanium alkoxide are mixed (step S31), at least a part of the titanium alkoxide may be hydrolyzed (step S32), for example, by mixing (adding) water. When at least a part of the titanium alkoxide is hydrolyzed, a bond between a surface of the lithium-nickel composite oxide particle and the titanium compound is strong, and a coating layer can be formed more reliably. It is conceivable that this is because a polymer generated by the hydrolysis of the titanium alkoxide easily forms a coating film (for example, titanium oxide) on a surface of the lithium-nickel composite oxide, and an oxygen-hydrogen bond (-OH) of the hydrolyzate easily forms a bond with oxygen on a surface of the lithium-nickel composite oxide.

The mixing amount of water is preferably 10 parts by mass or more and 50 parts by mass or less with respect to 100 parts by mass of the titanium alkoxide added. For example, the mixing amount of water may be 0.5 mol times or more and 2 mol times or less, and may be 0.8 mol times or more and 1.5 mol times or less with respect to an alkoxide group contained in the titanium alkoxide. The mixing amount of water may be 1.0 time or more from a viewpoint of performing sufficient hydrolysis.

Note that the solution obtained after hydrolysis (step S32) may be used as it is as the coating solution, or may be further diluted with a solvent so as to have a concentration suitable for coating. In the coating solution, the addition amount (mixing amount) of the titanium alkoxide may be, for example, 0.2% by mass or more and 10% by mass or less, and may be 0.5% by mass or more and 5% by mass or less with respect to the whole coating solution.

As illustrated in Fig. 5(B), the coating solution may be diluted by mixing a solvent and a glycol with the coating solution (step S33). The glycol is preferably one or more selected from the group consisting of polyethylene glycol, polypropylene glycol, and hexylene glycol. Among these compounds, polyethylene glycol and/or polypropylene glycol, which are/is easily soluble in water or a lower alcohol, are/is more preferable from viewpoints of low price and easy handling. By adding and mixing (diluting) a trace amount of a water-soluble glycol together with a solvent (step S33), it is possible to improve film uniformity during coating and to avoid film cracking and peeling that occur when drying. The addition amount of the glycol is, for example, 2 parts by mass or more and 20 parts by mass or less with respect to 100 parts by mass of the titanium alkoxide.

### (Attaching method)

A method for attaching the above coating solution to a surface of the lithium-nickel composite oxide particle can be a known method as long as attaching the coating solution uniformly to the surface of the particle. For example, the coating solution may be attached by mixing the lithium-nickel composite oxide and the coating solution. A method for spraying a titanium alkoxide solution into droplets while stirring and mixing the lithium-nickel composite oxide particle and attaching the droplet-shaped titanium alkoxide solution to the surface of the particle is preferable from a viewpoint of more uniformly attaching the coating solution.

The mixing amount (addition amount) of the coating solution can be appropriately adjusted depending on the amount of the titanium compound attached and the concentration of the titanium compound (titanium alkoxide/hydrolyzate of titanium alkoxide) in the coating solution to be added, but is preferably 5% by mass or more and 25% by mass or less with respect to the whole lithium-nickel composite oxide. When the mixing amount of the coating solution exceeds the above range, the mixture may become paste-like and subsequent handling may be extremely difficult.

### [Drying process (step S40)]

Subsequently, the lithium-nickel composite oxide with the coating solution attached thereto is dried (step S40). By drying (step S40), an unnecessary solvent component can be removed. During the drying process (step S40), the titanium alkoxide/hydrolyzate of titanium alkoxide in the coating solution is adsorbed on and bonded to a surface of the lithium-nickel composite oxide particle. Note that the drying process (step S40) may be performed simultaneously with the above attaching process (step S30) or may be performed separately therefrom.

The drying temperature is not particularly limited, but may be, for example, 20°C or higher and 200°C or lower, and 50°C or higher and 200°C or lower. When an alcohol is used as the solvent, the drying temperature may be 50°C or higher and lower than 150°C. After the hydrolysis (step S32), when an aqueous solvent such as water is used as a solvent for dilution (step S34), the drying temperature may be 100°C or higher and 200°C or lower.

When a heat treatment process (step S50) is performed after the drying process (step S40), the drying temperature is, for example, preferably 20°C or higher and lower than 150°C, and may be 50°C or higher and lower than 150°C. The drying temperature may be room temperature, for example.

The drying time is not particularly limited as long as sticking among the particles does not occur due to evaporation of the solvent, and is, for example, one hour or more and five hours or less. The drying atmosphere is not particularly limited, but may be an acidic atmosphere (for example, the atmosphere) from viewpoints of easy handling and cost.

### [Thermal treatment process (step S50)]

As illustrated in Fig. 3, after the drying process (step S40), the obtained dried product may be subjected to a heat treatment process (step S50). By performing the heat treatment process (step S50), although details are unclear, the amount of eluted Li that can be one of causes of gelation of the positive electrode mixture paste can be reduced, and the battery capacity (for example, initial discharge capacity) can be improved.

By the heat treatment process (step S50), it is possible to reduce an organic component and water remaining in the coating solution attaching to a surface of the lithium-nickel composite oxide, and to increase denseness and crystallinity of the obtained titanium compound-containing coating layer (coating film). In addition, by the heat treatment (step S50), it is conceivable that a part of the titanium alkoxide and/or the hydrolyzate of the titanium alkoxide are/is strongly bonded to a surface of the lithium-nickel composite oxide particle as a hydroxide or an oxide, and a titanium compound-containing coating layer (coating film) is less likely to be peeled off and can be present more uniformly on the surface of the particle.

The heat treatment temperature is preferably 150°C or higher and 500°C or lower, and more preferably 250°C or higher and 400°C or lower. When the heat treatment temperature is lower than 150°C, water and an organic substance may remain in the coating layer (coating film) to deteriorate the battery characteristics. Meanwhile, when the heat treatment temperature exceeds 500°C, sintering of the lithium-nickel composite oxide proceeds excessively, which may deteriorate the battery characteristics.

The heat treatment time is, for example, 0.5 hours or more and 10 hours or less, and more preferably one hour or more and five hours or less. When the heat treatment time is within the above range, fixing to a surface of the positive electrode active material and removal of an unnecessary organic solvent can be performed sufficiently efficiently.

The atmosphere for the heat treatment is not particularly limited, and may be selected from the group consisting of an oxygen atmosphere, an inert atmosphere, and a vacuum atmosphere. An atmosphere gas obtained by removing carbon dioxide gas and water is preferably used from a viewpoint of preventing deterioration of the lithium-nickel composite oxide particle. For example, the atmosphere gas is preferably dry air obtained by removing carbon dioxide gas and water, or oxygen. Note that when an inert gas such as nitrogen or argon is used as the atmosphere gas, the lithium-nickel composite oxide particle may be reduced to deteriorate the battery characteristics. The heat treatment may be performed in the atmosphere or in a vacuum atmosphere.

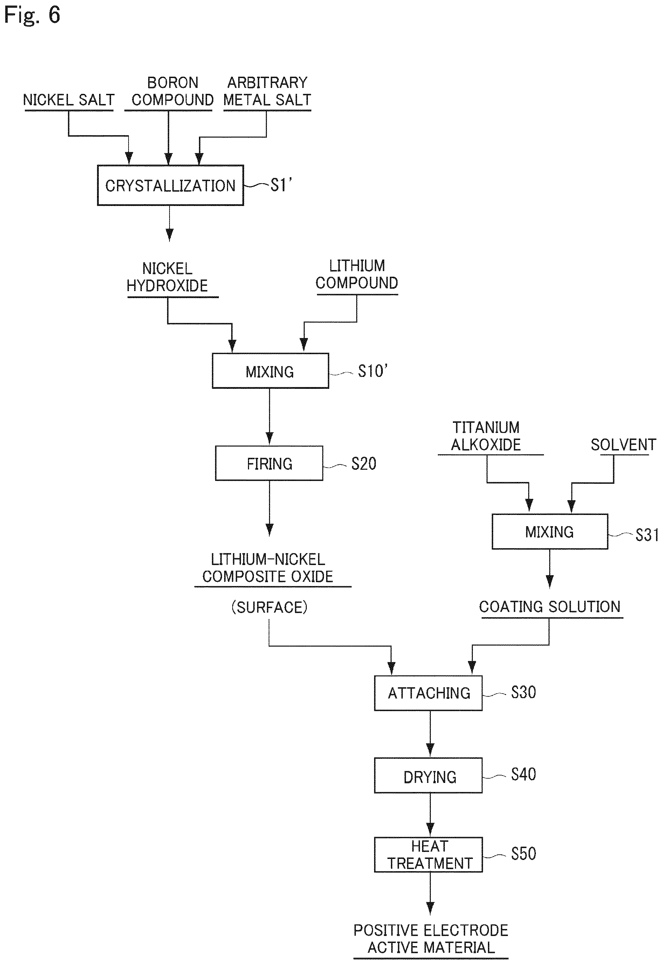

Note that as illustrated in Fig. 6, the lithium-nickel composite oxide containing boron may be added as a compound containing boron (salt containing boron) during crystallization (step S1'). As a result, boron can be uniformly contained in the obtained nickel compound. Subsequently, the nickel compound containing boron and the lithium compound are mixed (step S10') and fired (step S20) to obtain a lithium-nickel composite oxide containing boron. Note that when a boron compound is mixed in the above-described mixing process (step S10), the obtained lithium-nickel composite oxide can be easily adjusted so as to have a target addition amount of boron. Note that Fig. 6 illustrates an example including the heat treatment step (step S50). However, the heat treatment process (step S50) does not have to be included, and a dried product (lithium-nickel composite oxide) obtained after the drying process (step S40) may be used as the positive electrode active material.

### 3. Non-aqueous electrolyte secondary battery

The positive electrode active material 100 obtained by the above-described producing method of the present embodiment can be suitably used for a positive electrode of a non-aqueous electrolyte secondary battery (hereinafter, also referred to as "secondary battery"). The secondary battery includes, for example, a positive electrode, a negative electrode, a non-aqueous electrolyte solution, and a separator. The secondary battery may include, for example, a positive electrode, a negative electrode, and a solid electrolyte solution. The secondary battery may include similar components to those of a general non-aqueous electrolyte secondary battery.

Hereinafter, a secondary battery including a positive electrode, a negative electrode, a non-aqueous electrolyte solution, and a separator will be described. Note that an embodiment described below is merely an example, and the non-aqueous electrolyte secondary battery according to the present invention can be implemented in various modified forms or improved forms on the basis of knowledge of those skilled in the art on the basis of the embodiment described here. In addition, applications of the non-aqueous electrolyte secondary battery according to the present embodiment are not particularly limited.

### (a) Positive electrode

Using the positive electrode active material 100, a positive electrode of a non-aqueous electrolyte secondary battery can be produced, for example, as follows.

First, the powdered positive electrode active material 100, a conductive agent, and a binding agent are mixed, activated carbon and a solvent for viscosity adjustment or the like are further added if necessary, and the resulting mixture is kneaded to produce a positive electrode mixture paste. Gelation of the positive electrode mixture paste produced using the positive electrode active material 100 according to the present embodiment is extremely suppressed.

The mixing ratios of the components in the positive electrode mixture paste are not particularly limited. For example, when the total mass of the solid contents of the positive electrode mixture excluding the solvent is 100 parts by mass, the content of the positive electrode active material 100 is preferably 60 to 95 parts by mass, the content of the conductive agent is preferably 1 to 20 parts by mass, and the content of the binding agent is preferably 1 to 20 parts by mass.

The obtained positive electrode mixture paste is applied to, for example, a surface of an aluminum foil current collector and dried to scatter the solvent. Pressurization may be performed by roll press or the like in order to increase electrode density if necessary. In this way, a sheet-like positive electrode can be produced. The sheet-like positive electrode can be cut into an appropriate size or the like according to a target battery to be used for producing a battery. However, a method for producing the positive electrode is not limited to the exemplified one, and another method may be used.

For producing the positive electrode, examples of the conductive agent include graphite (natural graphite, artificial graphite, expanded graphite, and the like), and a carbon black-based material such as acetylene black or ketjen black.

The binding agent plays a role of bonding active material particles together, and examples thereof include polyvinylidene fluoride (PVDF), polytetrafluoroethylene (PTFE), a fluorine-containing rubber, an ethylene propylene diene rubber, styrene butadiene, a cellulose-based resin, and polyacrylic acid.

Note that a solvent that disperses the positive electrode active material 100, the conductive agent, and the activated carbon and dissolves the binding agent is added to the positive electrode mixture if necessary. Specifically, an organic solvent such as N-methyl-2-pyrrolidone can be used as the solvent. Activated carbon can be added to the positive electrode mixture in order to increase electric double layer capacity.

### (b) Negative electrode

For a negative electrode, metal lithium, a lithium alloy, or the like may be used. Alternatively, a negative electrode may be formed by mixing a binding agent with a negative electrode active material that can occlude and desorb lithium ions, adding an appropriate solvent thereto to form a paste-like negative electrode mixture, applying the paste-like negative electrode mixture to a surface of a metal foil current collector such as copper, drying the negative electrode mixture, and compressing the resulting product in order to increase the electrode density if necessary.

As the negative electrode active material, natural graphite, artificial graphite, a fired organic compound such as a phenol resin, and a powdery carbon material such as coke can be used. In this case, as the negative electrode binding agent, as in the positive electrode, for example, a fluorine-containing resin such as PVDF can be used. As a solvent for dispersing the active material and the binding agent, an organic solvent such as N-methyl-2-pyrrolidone can be used.

### (c) Separator

A separator is disposed by being interposed between the positive electrode and the negative electrode. The separator separates the positive electrode and the negative electrode from each other and retains the electrolyte, and a thin film which is formed of polyethylene, polypropylene, or the like and has a large number of minute holes can be used.

### (d) Non-aqueous electrolyte solution

The non-aqueous electrolyte solution is obtained by dissolving a lithium salt as a supporting salt in an organic solvent.

As the organic solvent, one selected from the group consisting of cyclic carbonates such as ethylene carbonate, propylene carbonate, butylene carbonate, and trifluoropropylene carbonate, chain carbonates such as diethyl carbonate, dimethyl carbonate, ethyl methyl carbonate, and dipropyl carbonate, further, ether compounds such as tetrahydrofuran, 2-methyltetrahydrofuran, and dimethoxyethane, sulfur compounds such as ethyl methyl sulfone and butane sultone, and phosphorus compounds such as triethyl phosphate and trioctyl phosphate can be used singly or in mixture of two or more kinds thereof.

As the supporting salt, LiPF₆, LiBF₄, LiClO₄, LiAsF₆, LiN(CF₃SO₂)₂, or the like, and a composite salt of these can be used.

Furthermore, the non-aqueous electrolyte solution may contain a radical scavenger, a surfactant, a flame retardant, and the like.

### (e) Shape and configuration of secondary battery

The secondary battery may have various shapes such as a cylindrical shape and a laminated shape. Even when the secondary battery has any shape, the positive electrode and the negative electrode are laminated via the separator to form an electrode body, the obtained electrode body is impregnated with the non-aqueous electrolyte solution, a positive electrode current collector is connected to a positive electrode terminal communicating with the outside using a current collecting lead or the like, a negative electrode current collector is connected to a negative electrode terminal communicating with the outside using a current collecting lead or the like, and the resulting product is sealed in a battery case to complete the non-aqueous electrolyte secondary battery.

### (f) Characteristics

A non-aqueous electrolyte secondary battery using the positive electrode active material 100 obtained by the producing method according to the present embodiment can have high capacity and low positive electrode resistance. When a non-aqueous electrolyte secondary battery using the positive electrode active material 100 obtained in a particularly preferable embodiment is used, for example, for a positive electrode of a 2032 type coin type battery, high initial discharge capacity of 190 mAh/g or more, preferably 200 mAh/g or more can be obtained.

### Examples

Next, an embodiment of the present invention will be described in detail with reference to Examples. Note that the present invention is not limited to these Examples. Note that an analysis method and various evaluation methods for a positive electrode active material in each of Examples and Comparative examples are as follows.

### [Whole particle composition]

A positive electrode active material was dissolved in nitric acid, and then measured with an ICP emission spectroscopic analyzer (ICPS-8100 produced by Shimadzu Corporation).

### [Identification of compound species]

A positive electrode active material was evaluated by an X-ray diffractometer (X'Pert, PROMRD manufactured by PANALYTICAL Ltd.).

### [Measurement of amount of eluted lithium]

In 75 ml of pure water, 15 g of a positive electrode active material was stirred and dispersed. Thereafter, the resulting mixture was allowed to stand for 10 minutes, 10 ml of the supernatant was diluted with 50 ml of pure water, the amount of lithium (alkali content) in the supernatant was quantified by a neutralization titration method, and the amount of eluted lithium was measured.

### [Evaluation of battery characteristics]

### (Structure of coin type battery)

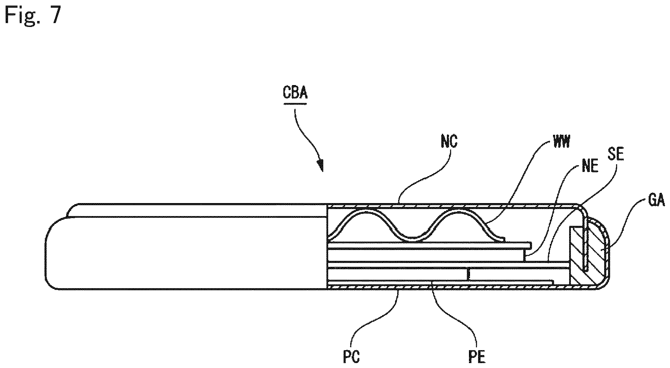

To evaluate the capacity of a positive electrode active material, a 2032 type coin type battery CBA illustrated in Fig. 7 was used. The coin type battery CBA includes a case, an electrode housed in the case, and a wave washer WW.

The case includes a positive electrode can PC which is hollow and has one end opened, and a negative electrode can NC disposed in the opening of the positive electrode can PC. When the negative electrode can NC is disposed in the opening of the positive electrode can PC, a space for housing an electrode is formed between the negative electrode can NC and the positive electrode can PC.

The electrode is formed by a positive electrode PE, a separator SE, and a negative electrode NE, which are stacked in this order and housed in the case such that the positive electrode PE is in contact with an inner surface of the positive electrode can PC and the negative electrode NE is in contact with an inner surface of the negative electrode can NC. Note that the case includes a gasket GA, and the gasket GA fixes the positive electrode can PC and the negative electrode can NC so as to maintain a state in which the positive electrode can PC and the negative electrode can NC are not in contact with each other.

In addition, the gasket GA also has a function of sealing a gap between the positive electrode can PC and the negative electrode can NC to shut off a passage between the inside of the case and the outside thereof in an airtight and liquidtight manner. The coin type battery CBA was produced as follows.

### (Production of coin type battery)

First, a slurry in which 20.0 g of the obtained positive electrode active material, 2.35 g of acetylene black, and 1.18 g of polyvinylidene fluoride were dispersed in N-methyl-2-pyrrolidone (NMP) was applied onto an Al foil such that the positive electrode active material was present in an amount of 5.0 mg per square centimeter, and then dried in the atmosphere at 120°C for 30 minutes to remove NMP. The Al foil to which the positive electrode active material had been applied was cut into a strip shape with a width of 66 mm, and roll-pressed with a load of 1.2 t to produce a positive electrode PE. The positive electrode PE was punched into a circle having a diameter of 13 mm and dried in a vacuum dryer at 120°C for 12 hours.

Next, using the positive electrode PE, a coin type battery CBA was produced in a glove box having an Ar atmosphere whose dew point was managed at -80°C. At this time, as the negative electrode NE, a lithium foil punched into a disk shape having a diameter of 14 mm was used.

For initial discharge capacity, discharge capacity was measured when the coin type battery CBA was left for about 24 hours after production thereof to stabilize an open circuit voltage (OCV), then the battery was charged to a cutoff voltage of 4.3 V at a current density of 0.1 mA/cm² with respect to the positive electrode, the battery paused for one hour, and then the battery was discharged to a cutoff voltage of 3.0 V. This discharge capacity was taken as initial discharge capacity.

### [Evaluation of viscosity stability of positive electrode mixture paste]

A positive electrode mixture paste was produced by kneading 20.0 g of a positive electrode active material for non-aqueous electrolyte secondary batteries, 2.35 g of carbon powder as a conduction aid, 14.7 g of a KF polymer L#7208 (solid content 8% by mass) as a binding agent, and 5.1 g of N-methyl-2-pyrrolidone (NMP) as a solvent for 15 minutes using a rotation and revolution mixer. The stability of the positive electrode mixture paste was evaluated by putting the produced positive electrode mixture paste in a polypropylene closed container, storing the positive electrode mixture paste at room temperature for seven days, and then observing the positive electrode mixture paste. The viscosity was confirmed visually and with a glass rod. A positive electrode mixture paste that maintained fluidity and was not gelled was evaluated as o, and a positive electrode mixture paste that could not be stirred due to being solidified even when it was tried to stir the positive electrode mixture paste with a glass rod and was gelled was evaluated as ×.

### (Example 1)

### [Lithium-nickel composite oxide]

To 3000 g of a nickel composite oxide having an average particle size of 13.0 µm (composition formula: Ni_{0.87}Co_{0.09}Al_{0.04}O₂), produced according to a known technique, 7.46 g of boric acid powder (H₃BO₃, manufactured by Wako Pure Chemical Industries, Ltd.) having a particle size of 106 µm or less, obtained by sieving the boric acid powder with a 106 um sieve, was added. Thereafter, 1005.15 g of lithium hydroxide (LiOH) was added thereto and mixed therewith. Mixing was performed using a shaker mixer (TURBULA TypeT2C manufactured by Willy A. Bachofen (WAB)). Note that the nickel composite oxide was obtained by heat treating a nickel composite hydroxide produced by a crystallization method. The obtained mixture was fired in an oxygen flow (oxygen: 100% by volume) at 750°C for eight hours, cooled, and then crushed with a hammer mill to obtain fired powder (lithium-nickel composite oxide).

It was confirmed by ICP emission spectroscopy that the obtained fired powder contained 0.03% by mass of boron (B), 7.39% by mass of lithium (Li),52.3% by mass of nickel (Ni), 5.75% by mass of cobalt (Co), and 1.07% by mass of aluminum (Al). A mole ratio of Ni : Co : Al was 0.87 : 0.09 : 0.04, and a mole ratio of lithium to the mole of Ni, Co, and Al was 1.03. In X-ray diffraction, only a peak corresponding to lithium nickelate (LiNiO₂) was observed, and no peak similar to the peak of a boron compound was observed. It was confirmed that the added boron was solid-solved in the crystal of the lithium-nickel composite oxide.

### [Titanium compound coating film forming solution]

To 50 mL of isopropyl alcohol (manufactured by Wako Pure Chemical Industries, Ltd.), 1.8 g of titanium tetrabutoxide (Ti(OC₄H₉)₄, manufactured by Tokyo Chemical Industry Co., Ltd.) and 0.9 g of acetylacetone (manufactured by Wako Pure Chemical Industries, Ltd.) were added and mixed in a beaker, and then stirred for 30 minutes while being heated at 60°C in a water bath. The resulting product was cooled to room temperature. Thereafter, 75 mL of isopropyl alcohol (manufactured by Wako Pure Chemical Industries, Ltd.) and 0.54 g of pure water were added thereto and stirred for 15 minutes at room temperature to obtain a titanium compound coating film forming solution containing a hydrolyzate of the titanium tetrabutoxide.

### [Coating with titanium compound]

Into a rolling fluid coating apparatus (MP-01 manufactured by Powrex Corporation), 600 g of the boron-containing lithium-nickel composite oxide was put. The titanium compound coating film forming solution was sprayed on the boron-containing lithium-nickel composite oxide while being mixed to coat the boron-containing lithium-nickel composite oxide with a titanium compound. After spraying was finished, the resulting product was dried at 110°C for four hours to obtain a boron-containing lithium-nickel composite oxide coated with a titanium compound as a positive electrode active material.

It was confirmed by ICP emission spectroscopy that the obtained positive electrode active material contained 0.04% by mass of titanium. In addition, the obtained positive electrode active material was embedded in an epoxy resin, and then subjected to cross polisher processing to prepare a sample having a particle cross section exposed. A distribution state of titanium in the sample was confirmed by energy dispersive X-ray analysis (EDS). As a result, titanium was detected only near a surface of a particle, and it was confirmed that the obtained positive electrode active material had a coating film containing titanium tetrabutoxide and a hydrolyzate thereof on a surface of the lithium-nickel composite oxide particle containing a trace amount of boron.

Using the above positive electrode active material, a coin type battery for evaluation was produced by the above-described method, and initial discharge capacity was measured by the above-described evaluation method. As a result, the initial discharge capacity was 202 mAh/g. In addition, the stability of the positive electrode mixture paste was evaluated by the above-described method. As a result, the positive electrode mixture paste after storage maintained fluidity, and had a stability evaluation result of o. The evaluation results are presented in Table 1.

### (Example 2)

A positive electrode active material was produced and evaluated under similar conditions to those of Example 1 except that the addition amount of boric acid powder was adjusted such that the content of boron (B) in the obtained fired powder (lithium-nickel composite oxide) was 0.10% by mass. The evaluation results are presented in Table 1.

### (Example 3)

A positive electrode active material was produced and evaluated under similar conditions to those of Example 1 except that the coating amount of the titanium compound was adjusted such that the content of titanium in the obtained positive electrode active material was 0.10% by mass. The evaluation results are presented in Table 1.

### (Comparative Example 1)

In a similar manner to Example 1, to 3000 g of a nickel composite oxide having an average particle size of 13.0 um (compositional formula: Ni_{0.87}Co_{0.09}Al_{0.04}O₂), produced according to a known technique, 1005.15 g of lithium hydroxide (LiOH) was added and mixed therewith. Mixing was performed using a shaker mixer (TURBULA TypeT2C manufactured by Willy A. Bachofen (WAB)). The obtained mixture was fired at 750°C for eight hours in an oxygen flow (oxygen: 100% by volume), cooled, and then crushed with a hammer mill to obtain fired powder.

It was confirmed by ICP emission spectroscopy that the obtained fired powder contained 7.40% by mass of lithium (Li),52.3% by mass of nickel (Ni), 5.76% by mass of cobalt (Co), and 1.08% by mass of aluminum (Al). A mole ratio of Ni : Co : Al was 0.87 : 0.09 : 0.04, and a mole ratio of lithium to the mole of Ni, Co, and Al was 1.03. In X-ray diffraction, only a peak corresponding to lithium nickelate (LiNiO₂) was observed, and it was confirmed that the obtained fired powder was a lithium-nickel composite oxide having the above composition.

Using the lithium-nickel composite oxide, battery characteristics and stability of the positive electrode mixture paste were evaluated in a similar manner to Example 1. Initial discharge capacity was 201 mAh/g. The positive electrode mixture paste after storage was so gelled that the positive electrode mixture paste could not be deformed with a glass rod, and had a stability evaluation result of ×. The evaluation results are presented in Table 1.

### (Comparative Example 2)

For a positive electrode active material in which a boron-containing lithium-nickel composite oxide produced in a similar manner to Example 1 was not coated with a titanium compound and a titanium compound coating film was not formed on a surface of a particle thereof, battery characteristics and stability of a positive electrode mixture paste were evaluated in a similar manner to Example 1. Initial discharge capacity was 204 mAh/g. The positive electrode mixture paste after storage was so gelled that the positive electrode mixture paste could not be deformed with a glass rod, and had a stability evaluation result of ×. The evaluation results are presented in Table 1.

### (Comparative Example 3)

A boron-free lithium-nickel composite oxide coated with a titanium compound was obtained as a positive electrode active material in a similar manner to Example 1 except that the boron-free lithium-nickel composite oxide (fired powder) synthesized in Comparative Example 1 was used.

It was confirmed by ICP emission spectroscopy that the obtained positive electrode active material for non-aqueous electrolyte secondary batteries contained 0.04% by mass of titanium. In addition, the obtained positive electrode active material was embedded in an epoxy resin, and then subjected to cross polisher processing to prepare a sample having a particle cross section exposed. A distribution state of titanium in the sample was confirmed by energy dispersive X-ray analysis (EDS). As a result, titanium was detected only near a surface of a particle, and it was confirmed that the obtained positive electrode active material had a coating film containing titanium tetrabutoxide and a hydrolyzate thereof on a surface of the boron-free lithium-nickel composite oxide particle.

Using the above positive electrode active material, a coin type battery for evaluation was produced by the above-described method, and initial discharge capacity was measured by the above-described evaluation method. As a result, the initial discharge capacity was 195 mAh/g. In addition, the stability of the positive electrode mixture paste was evaluated by the above-described method. As a result, the positive electrode mixture paste after storage maintained fluidity, and had a stability evaluation result of o. The evaluation results are presented in Table 1.

### (Comparative Example 4)

A positive electrode active material was produced under similar conditions to those of Example 1 except that 1.8 g of titanium tetrabutoxide (Ti(OC₄H₉)₄ manufactured by Tokyo Chemical Industry Co., Ltd.) was added to 125 mL of isopropyl alcohol (manufactured by Wako Pure Chemical Industries, Ltd.), mixed in a beaker, and then stirred for 30 minutes while being heated at 60°C in a water bath to obtain a titanium compound coating film forming solution containing a hydrolyzate of titanium tetrabutoxide. The content of titanium in the obtained positive electrode active material for non-aqueous electrolyte secondary batteries was analyzed by ICP emission spectroscopy. As a result, the content of titanium was significantly lower than a target titanium content, and the positive electrode active material was not evaluated.

The results of measuring initial discharge capacity and the results of evaluating the stability of the positive electrode mixture pastes using the positive electrode active materials obtained in Examples and Comparative Examples are presented in Table 1.

**[Table 1]**

| | Positive electrode active material | | | | | | Paste | Battery characteristics |
|---|---|---|---|---|---|---|---|---|
| | Precursor | B compound | Li compound | | Ti coating amount | Addition of water | Viscosity stability | Initial discharge capacity |
| | Composition | Mixing amount | Kind | Li/Me ratio | | | | |
| | | % by weight | | | % by weight | | | mAh/g |
| Example 1 | Ni_{0.87}Co_{0.09}Al_{0.04}O₂ | 0. 03 | LiOH | 1. 03 | 0.04 | Added | ∘ | 202 |
| Example 2 | | 0.1 | | 1. 03 | 0.04 | Added | ∘ | 203 |
| Example 3 | | 0. 03 | | 1. 03 | 0.1 | Added | ∘ | 201 |
| Comparative Example 1 | Ni_{0.87}Co_{0.09}Al_{0.04}O₂ | - | LiOH | 1. 03 | - | - | × | 201 |
| Comparative Example 2 | | 0. 03 | | 1. 03 | - | - | × | 204 |
| Comparative Example 3 | | - | | 1.03 | 0.04 | Added | ∘ | 195 |
| Comparative Example 4 | | 0. 03 | | 1. 03 | - | Not added | - | - |

### (Evaluation result 1)

The positive electrode active materials each having a coating film containing a hydrolyzate of titanium tetrabutoxide as a main component formed on a surface of the boron-containing lithium-nickel composite oxide particle in Examples could suppress gelation of the positive electrode mixture paste, and obtained high initial discharge capacity exceeding 200 mAh/g. Meanwhile, neither of the positive electrode active materials in Comparative Examples 1 and 2 having no coating film formed on a surface of the lithium-nickel composite oxide particle could suppress gelation of the positive electrode mixture paste. The positive electrode active material in Comparative Example 3 having a coating film formed on a surface of the boron-free lithium-nickel composite oxide particle could suppress gelation of the positive electrode mixture paste, but had lower initial discharge capacity than that in Example 1. In Comparative Example 4 in which the titanium compound was not hydrolyzed, formation of a coating layer was insufficient.

### (Example 4)

### [Thermal treatment]

The positive electrode active material obtained in Example 1 was put in an alumina boat and heat treated at 300°C for one hour in an oxygen flow (oxygen: 100% by volume) in a tubular furnace. It was confirmed by ICP emission spectroscopy that the obtained positive electrode active material contained 0.04% by mass of titanium. In energy dispersive X-ray analysis (EDS), titanium (Ti) and oxygen (O) were detected on a surface of a particle, and it was confirmed that a coating film containing a titanium oxide as a main component was formed on a surface of the boron-containing lithium-nickel composite oxide particle. Furthermore, the obtained positive electrode active material was embedded in an epoxy resin, and then subjected to cross polisher processing to prepare a sample having a particle cross section exposed. A distribution state of titanium in the sample was confirmed by energy dispersive X-ray analysis (EDS). As a result, titanium was detected only near a surface of a particle, and it was confirmed that the obtained positive electrode active material had a coating film containing titanium tetrabutoxide and a hydrolyzate thereof on a surface of the lithium-nickel composite oxide particle containing a trace amount of boron.

Using the above heat treated positive electrode active material, a coin type battery for evaluation was produced by the above-described method, and initial discharge capacity was measured by the above-described evaluation method. As a result, the initial discharge capacity was 205 mAh/g. In addition, the stability of the positive electrode mixture paste was evaluated by the above-described method. As a result, the positive electrode mixture paste after storage maintained fluidity, and had a stability evaluation result of o. The amount of eluted lithium was measured by the above-described method, and was 0.14% by mass with respect to the whole positive electrode active material. The evaluation results are presented in Table 2.

### (Example 5)

A positive electrode active material was obtained under similar conditions to those of Example 4 except that the heat treatment was performed in an oxygen flow (oxygen: 100% by volume) at 400°C for one hour. The battery characteristics of the obtained positive electrode active material and the stability of the positive electrode mixture paste were evaluated, and the amount of eluted lithium was measured. The evaluation results are presented in Table 2.

### (Example 6)

A positive electrode active material was obtained under similar conditions to those of Example 4 except that the coating amount of the titanium compound was adjusted such that the content of titanium in the obtained positive electrode active material was 0.10% by mass. The battery characteristics of the obtained positive electrode active material and the stability of the positive electrode mixture paste were evaluated. The evaluation results are presented in Table 2.

### (Comparative Example 5)

A lithium-nickel composite oxide coated with a titanium compound was obtained as a positive electrode active material in a similar manner to Example 4 except that the boron-free lithium-nickel composite oxide (fired powder) synthesized in Comparative Example 1 was used. The battery characteristics of the obtained positive electrode active material and the stability of the positive electrode mixture paste were evaluated. The evaluation result of Comparative Example 5 is presented in Table 2 together with the above-described evaluation results of Comparative Examples 1 and 2.

**[Table 2]**

| | Positive electrode active material | | | | | | | | Paste | Battery characteristics |
|---|---|---|---|---|---|---|---|---|---|---|
| | Precursor | B compound | Li compound | | Ti coating amount | Addition of water | Thermal treatment temperature | Amount of eluted Li | Viscosity stability | Initial discharge capacity |
| | Composition | Mixing amount | Kind | Li/Me ratio | | | | | | |
| | | % by weight | | | % by mass | | °C | % by weight | | (mAh/g) |
| Example 1 | Ni_{0.87}Co_{0.09}Al_{0.04}O₂ | 0.03 | LiOH | 1. 03 | 0. 04 | Added | - | 0.23 | ∘ | 202 |
| Example 4 | | 0.03 | | 1. 03 | 0. 04 | Added | 300 | 0.14 | ∘ | 205 |
| Example 5 | | 0.03 | | 1. 03 | 0. 04 | Added | 400 | 0.12 | ∘ | 209 |
| Example 6 | | 0.03 | | 1. 03 | 0.1 | Added | 300 | 0.10 | ∘ | 204 |
| Comparative Example 1 | Ni_{0.87}Co_{0.09}Al_{0.04}O₂ | - | LiOH | 1. 03 | - | - | - | 0.41 | × | 201 |
| Comparative Example 2 | | 0.03 | | 1. 03 | - | - | - | 0.38 | × | 204 |
| Comparative Example 5 | | - | | 1. 03 | 0. 04 | Added | 300 | 0.19 | ∘ | 195 |

### (Evaluation result 2)

It was found that the positive electrode active materials in Examples 4 to 6 obtained by further heat treating the positive electrode active material in Example 1 had a smaller amount of eluted Li than the positive electrode active material in Example 1 and had initial discharge capacity at the same degree as or better than the positive electrode active material containing only boron in Comparative Example 2. Meanwhile, the positive electrode active material in Comparative Example 5 obtained by further heat treating the positive electrode active material in Comparative Example 3 having a coating film on a surface of the boron-free lithium-nickel composite oxide particle could suppress gelation of the positive electrode mixture paste, but had a larger amount of eluted Li and lower initial discharge capacity than the positive electrode active materials in Examples 4 to 6.

### Industrial Applicability

The positive electrode active material for non-aqueous electrolyte secondary batteries according to the present invention increases the capacity of a battery when being used as a positive electrode material for the battery, can suppress gelation of a positive electrode mixture paste, and is suitable as a positive electrode active material of a lithium ion battery used as a power source particularly for a hybrid car or an electric car.

### Reference Signs List

- 100: Positive electrode active material
- 10: Lithium-nickel composite oxide particle
- 1: Primary particle
- 2: Secondary particle
- 20: Coating layer
- CBA: Coin type battery
- CA: Case
- PE: Positive electrode
- NE: Negative electrode
- GA: Gasket
- PE: Positive electrode
- NE: Negative electrode
- SE: Separator

## Claims

1. A positive electrode active material for non-aqueous electrolyte secondary batteries, comprising:
a lithium-nickel composite oxide particle; and
a coating layer attached to at least a part of a surface of the particle, wherein
the lithium-nickel composite oxide particle contains lithium (Li), nickel (Ni), cobalt (Co), and an element M, and a mole ratio among these elements is represented by Li : Ni : Co : M = s: (1 - x - y): x : y, in which 0.95 ≤ s ≤ 1.30, 0.55 ≤ (1 - x - y) ≤ 0.95, 0.05 ≤ x ≤ 0.35, 0 ≤ y ≤ 0.1, and M represents at least one element selected from the group consisting of Mn, V, Mg, Mo, Nb, Ti, and Al,
the lithium-nickel composite oxide particle contains boron inside the particle,
the coating layer contains a titanium compound, and
a content of the boron is 0.005% by mass or more and 0.1% by mass or less with respect to the whole positive electrode active material.

2. The positive electrode active material for non-aqueous electrolyte secondary batteries according to claim 1, wherein a content of titanium in the coating layer is 0.01% by mass or more and 0.15% or less with respect to the whole positive electrode active material.

3. The positive electrode active material for non-aqueous electrolyte secondary batteries according to claim 1 or 2, wherein the lithium-nickel composite oxide particle contains a secondary particle formed by aggregating a plurality of primary particles, and at least a part of the boron is solid-solved inside the lithium-nickel composite oxide particle.

4. The positive electrode active material for non-aqueous electrolyte secondary batteries according to any one of claims 1 to 3, wherein the coating layer contains an oxide containing titanium.

5. The positive electrode active material for non-aqueous electrolyte secondary batteries according to any one of claims 1 to 4, wherein an amount of lithium eluted when the positive electrode active material is immersed in water is 0.05% by mass or more and 0.25% by mass or less with respect to the whole positive electrode active material,
wherein, as for the amount of eluted lithium, 15 g of the positive electrode active material is stirred and dispersed in 75 ml of pure water, then the resulting mixture is allowed to stand for 10 minutes, 10 ml of the supernatant is diluted with 50 ml of pure water, the amount of lithium in the supernatant is measured by a neutralization titration method, and the amount of eluted lithium (% by mass) with respect to the whole positive electrode active material is calculated.

6. A method for producing a positive electrode active material for non-aqueous electrolyte secondary batteries, the method comprising:
mixing a nickel compound, a boron compound, and a lithium compound;
firing the mixture obtained by the mixing;
attaching a coating solution obtained by dissolving a titanium alkoxide in a solvent to a surface of a boron-containing lithium-nickel composite oxide particle obtained by the firing; and
drying the lithium-nickel composite oxide to which the coating solution is attached, wherein
the lithium-nickel composite oxide particle contains lithium (Li), nickel (Ni), cobalt (Co), an element M, and boron, and a mole ratio among these elements excluding boron is represented by Li : Ni : Co : M = s: (1 - x - y): x : y, in which 0.95 ≤ s ≤ 1.30, 0.55 ≤ (1 - x - y) ≤ 0.95, 0.05 ≤ x ≤ 0.35, 0 ≤ y ≤ 0.1, and M represents at least one element selected from the group consisting of Mn, V, Mg, Mo, Nb, Ti, and Al, and
a content of boron is 0.005% by mass or more and 0.1% by mass or less with respect to the whole lithium-nickel composite oxide.

7. The method for producing a positive electrode active material for non-aqueous electrolyte secondary batteries according to claim 6, wherein the coating solution contains a product obtained by hydrolyzing the titanium alkoxide.

8. The method for producing a positive electrode active material for non-aqueous electrolyte secondary batteries according to claim 7, wherein the hydrolysis is performed by adding pure water to a coating solution obtained by dissolving the titanium alkoxide in a solvent and stirring the resulting mixture at room temperature.

9. The method for producing a positive electrode active material for non-aqueous electrolyte secondary batteries according to any one of claims 6 to 8, wherein the nickel compound is at least one selected from the group consisting of nickel hydroxide and nickel oxide.

10. The method for producing a positive electrode active material for non-aqueous electrolyte secondary batteries according to any one of claims 6 to 9, wherein the lithium compound is at least one selected from the group consisting of lithium hydroxide, lithium oxide, lithium nitrate, lithium chloride, and lithium sulfate.

11. The method for producing a positive electrode active material for non-aqueous electrolyte secondary batteries according to any one of claims 6 to 10, wherein the boron compound is at least one selected from the group consisting of boric acid (H₃BO₃), boron oxide (B₂O₃), and lithium metaborate (LiBO₂).

12. The method for producing a positive electrode active material for non-aqueous electrolyte secondary batteries according to any one of claims 6 to 11, wherein the titanium alkoxide is at least one selected from the group consisting of titanium tetraethoxide (Ti(OC₂H₅)₄), titanium tetrapropoxide (Ti(OC₃H₇)₄), and titanium tetrabutoxide (Ti(OC₄H₉)₄).

13. The method for producing a positive electrode active material for non-aqueous electrolyte secondary batteries according to any one of claims 6 to 12, wherein the firing is performed in an oxygen atmosphere at a firing temperature of 700°C or higher and 800°C or lower.

14. The method for producing a positive electrode active material for non-aqueous electrolyte secondary batteries according to any one of claims 6 to 13, the method further comprising heat treating the dried lithium-nickel composite oxide in an oxygen atmosphere at 150°C or higher and 500°C or lower.

15. The method for producing a positive electrode active material for non-aqueous electrolyte secondary batteries according to any one of claims 6 to 14, wherein
a content of titanium in the coating layer is 0.01% by mass or more and 0.15% or less with respect to the whole positive electrode active material.

16. A non-aqueous electrolyte secondary battery, comprising: a positive electrode; a negative electrode; and a non-aqueous electrolyte, wherein the positive electrode includes the positive electrode active material according to any one of claims 1 to 5.

## Patentansprüche

1. Aktivmaterial der positiven Elektrode für Sekundärbatterien mit nicht-wässrigem Elektrolyten, umfassend:
ein Lithium-Nickel-Verbundoxidteilchen; und
eine Beschichtungsschicht, die an zumindest einem Teil der Oberfläche des Teilchens angebracht ist, wobei
das Lithium-Nickel-Verbundoxidteilchen Lithium (Li), Nickel (Ni), Kobalt (Co) und ein Element M enthält, und ein Molverhältnis dieser Elemente untereinander durch Li : Ni : Co : M = s : (1 - x - y ): x : y dargestellt wird, wobei 0,95 ≤ s ≤ 1,30 , 0,55 ≤ (1 - x - y) ≤ 0, 95 , 0, 05 ≤ x ≤ 0,35, 0 ≤ y ≤ 0,1 , und M mindestens ein Element darstellt, ausgewählt aus der Gruppe, bestehend aus Mn, V, Mg, Mo, Nb, Ti und Al,
das Lithium-Nickel-Verbundoxidteilchen Bor im Inneren des Teilchens enthält,
die Beschichtungsschicht eine Titanverbindung enthält, und
der Borgehalt 0,005 Massen-% oder mehr und 0,1 Massen-% oder weniger, bezogen auf das gesamte Aktivmaterial der positiven Elektrode, beträgt.

2. Aktivmaterial der positiven Elektrode für Sekundärbatterien mit nicht-wässrigem Elektrolyten gemäß Anspruch 1, wobei der Titangehalt in der Beschichtungsschicht 0,01 Massen-% oder mehr und 0,15 Massen-% oder weniger in Bezug auf das gesamte Aktivmaterial der positiven Elektrode beträgt.

3. Aktivmaterial der positiven Elektrode für Sekundärbatterien mit nicht-wässrigem Elektrolyten gemäß Anspruch 1 oder 2, wobei das Lithium-Nickel-Verbundoxidteilchen ein Sekundärteilchen enthält, das durch Aggregation einer Vielzahl von Primärteilchen gebildet wird, und wobei mindestens ein Teil des Bors im Inneren des Lithium-Nickel-Verbundoxidteilchens fest gelöst ist.

4. Aktivmaterial der positiven Elektrode für Sekundärbatterien mit nicht-wässrigem Elektrolyten gemäß einem der Ansprüche 1 bis 3, wobei die Beschichtungsschicht ein titanhaltiges Oxid enthält.

5. Aktivmaterial der positiven Elektrode für Sekundärbatterien mit nicht-wässrigem Elektrolyten gemäß einem der Ansprüche 1 bis 4, wobei die Menge an Lithium, die herausgelöst wird, wenn das Aktivmaterial der positiven Elektrode in Wasser eingetaucht wird, 0,05 Massen-% oder mehr und 0,25 Massen-% oder weniger in Bezug auf das gesamte Aktivmaterial der positiven Elektrode beträgt.
wobei, was die Menge des eluierten Lithiums betrifft, 15 g des Aktivmaterials der positiven Elektrode gerührt und in 75 ml reinem Wasser dispergiert werden, dann das resultierende Gemisch 10 Minuten stehen gelassen wird, 10 ml des Überstands mit 50 ml reinem Wasser verdünnt werden, die Lithiummenge im Überstand durch ein Neutralisationstitrationsverfahren gemessen wird und die Menge des eluierten Lithiums (Masse-%) in Bezug auf das gesamte Aktivmaterial der positiven Elektrode berechnet wird.

6. Verfahren zur Herstellung eines Aktivmaterials der positiven Elektrode für Sekundärbatterien mit nicht-wässrigem Elektrolyten, wobei das Verfahren umfasst:
Mischen einer Nickelverbindung, einer Borverbindung und einer Lithiumverbindung;
Brennen des durch das Mischen erhaltenen Gemisches;
Anbringen einer Beschichtungslösung, die durch Auflösen eines Titanalkoxids in einem Lösungsmittel erhalten wird, an einer Oberfläche eines durch Brennen erhaltenen borhaltigen Lithium-Nickel-Verbundoxidteilchens; und
Trocknen des Lithium-Nickel-Verbundoxids, an das die Beschichtungslösung gebunden ist, wobei
das Lithium-Nickel-Verbundoxidteilchen Lithium (Li), Nickel (Ni), Kobalt (Co), ein Element M und Bor enthält, und ein Molverhältnis zwischen diesen Elementen außer Bor durch Li : Ni : Co : M = s : (1 - x - y) : x : y dargestellt wird, wobei 0,95 ≤ s ≤ 1,30, 0,55 ≤ (1 - x - y) ≤ 0, 95, 0, 05 ≤ x ≤ 0,35, 0 ≤ y ≤ 0,1, und M mindestens ein Element darstellt, ausgewählt aus der Gruppe, bestehend aus Mn, V, Mg, Mo, Nb, Ti und Al, und
der Borgehalt 0,005 Massen-% oder mehr und 0,1 Massen-% oder weniger in Bezug auf das gesamte Lithium-Nickel-Verbundoxid beträgt.

7. Verfahren zur Herstellung eines Aktivmaterials der positiven Elektrode für Sekundärbatterien mit nicht-wässrigem Elektrolyten nach Anspruch 6, wobei die Beschichtungslösung ein durch Hydrolyse des Titanalkoxids erhaltenes Produkt enthält.

8. Verfahren zur Herstellung eines Aktivmaterials der positiven Elektrode für Sekundärbatterien mit nicht-wässrigem Elektrolyten gemäß Anspruch 7, wobei die Hydrolyse durch Zugabe von reinem Wasser zu einer Beschichtungslösung, die durch Auflösen des Titanalkoxids in einem Lösungsmittel erhalten wird, und Rühren des resultierenden Gemisches bei Raumtemperatur durchgeführt wird.

9. Verfahren zur Herstellung eines Aktivmaterials der positiven Elektrode für Sekundärbatterien mit nicht-wässrigem Elektrolyten nach einem der Ansprüche 6 bis 8, wobei die Nickelverbindung mindestens eine Verbindung, ausgewählt aus der Gruppe, bestehend aus Nickelhydroxid und Nickeloxid, ist.

10. Verfahren zur Herstellung eines Aktivmaterials der positiven Elektrode für Sekundärbatterien mit nicht-wässrigem Elektrolyten nach einem der Ansprüche 6 bis 9, wobei die Lithiumverbindung mindestens eine, ausgewählt aus der Gruppe, bestehend aus Lithiumhydroxid, Lithiumoxid, Lithiumnitrat, Lithiumchlorid und Lithiumsulfat, ist.

11. Verfahren zur Herstellung eines Aktivmaterials der positiven Elektrode für Sekundärbatterien mit nicht-wässrigem Elektrolyten nach einem der Ansprüche 6 bis 10, wobei die Borverbindung mindestens eine Verbindung, ausgewählt aus der Gruppe, bestehend aus Borsäure (H₃BO₃), Boroxid (B₂O₃) und Lithiummetaborat (LiBO₂), ist.

12. Verfahren zur Herstellung eines Aktivmaterials der positiven Elektrode für Sekundärbatterien mit nicht-wässrigem Elektrolyten nach einem der Ansprüche 6 bis 11, wobei das Titanalkoxid mindestens eines, ausgewählt aus der Gruppe, bestehend aus Titantetraethoxid (Ti(OC₂H₅)₄), Titantetrapropoxid (Ti(OC₃H7)₄) und Titantetrabutoxid (Ti(OC₄H₉)₄), ist.

13. Verfahren zur Herstellung eines Aktivmaterials der positiven Elektrode für Sekundärbatterien mit nicht-wässrigem Elektrolyten nach einem der Ansprüche 6 bis 12, wobei das Brennen in einer Sauerstoffatmosphäre bei einer Brenntemperatur von 700 °C oder mehr und 800 °C oder weniger durchgeführt wird.

14. Verfahren zur Herstellung eines positiven Elektrodenaktivmaterials für Sekundärbatterien mit nichtwässrigem Elektrolyten nach einem der Ansprüche 6 bis 13, wobei das Verfahren weiter eine Wärmebehandlung des getrockneten Lithium-Nickel-Verbundoxids in einer Sauerstoffatmosphäre bei 150 °C oder mehr und 500 °C oder weniger umfasst.

15. Verfahren zur Herstellung eines Aktivmaterials der positiven Elektrode für Sekundärbatterien mit nicht-wässrigem Elektrolyten nach einem der Ansprüche 6 bis 14, wobei
der Titangehalt in der Beschichtungsschicht 0,01 Massen-% oder mehr und 0,15 Massen-% oder weniger in Bezug auf das gesamte Aktivmaterial der positiven Elektrode beträgt.

16. Sekundärbatterie mit nicht-wässrigem Elektrolyt, umfassend: eine positive Elektrode, eine negative Elektrode und einen nicht-wässrigen Elektrolyten, wobei die positive Elektrode das Aktivmaterial der positiven Elektrode gemäß einem der Ansprüche 1 bis 5 einschließt.

## Revendications

1. Matériau actif d'électrode positive pour batteries rechargeables à électrolyte non aqueux, comprenant :
une particule d'oxyde composite de lithium-nickel ; et
une couche d'enrobage reliée à au moins une partie d'une surface de la particule, dans lequel
la particule d'oxyde composite de lithium-nickel contient du lithium (Li), nickel (Ni), cobalt (Co) et un élément M, et un rapport molaire parmi ces éléments est représenté par Li/Ni/Co/M = s/(1 - x - y)/x/y, dans laquelle 0,95 ≤ s ≤ 1,30, 0,55 ≤ (1 - x - y) ≤ 0,95, 0,05 ≤ x ≤ 0,35, 0 ≤ y ≤ 0,1, et M représente au moins un élément sélectionné parmi le groupe constitué de Mn, V, Mg, Mo, Nb, Ti et Al, la particule d'oxyde composite de lithium-nickel contient du bore à l'intérieur de la particule,
la couche d'enrobage contient un composé de titane, et
une teneur en le bore est de 0,005 % en masse ou plus et 0,1 % en masse ou moins par rapport au matériau actif d'électrode positive entier.

2. Matériau actif d'électrode positive pour batteries rechargeables à électrolyte non aqueux selon la revendication 1, dans lequel une teneur en titane dans la couche d'enrobage est de 0,01 % en masse ou plus et 0,15 % ou moins par rapport au matériau actif d'électrode positive entier.

3. Matériau actif d'électrode positive pour batteries rechargeables à électrolyte non aqueux selon la revendication 1 ou 2, dans lequel la particule d'oxyde composite de lithium-nickel contient une particule secondaire formée en agrégant une pluralité de particules primaires, et au moins une partie du bore est dissous de manière solide à l'intérieur de la particule d'oxyde composite de lithium-nickel.

4. Matériau actif d'électrode positive pour batteries rechargeables à électrolyte non aqueux selon l'une quelconque des revendications 1 à 3, dans lequel la couche d'enrobage contient un oxyde contenant du titane.

5. Matériau actif d'électrode positive pour batteries rechargeables à électrolyte non aqueux selon l'une quelconque des revendications 1 à 4, dans lequel une quantité de lithium élué lorsque le matériau actif d'électrode positive est immergé dans de l'eau est de 0,05 % en masse ou plus et 0,25 % en masse ou moins par rapport au matériau actif d'électrode positive entier,
dans lequel, en ce qui concerne la quantité de lithium élué, 15 g du matériau actif d'électrode positive sont agités et dispersés dans 75 ml d'eau pure, puis le mélange résultant est laissé au repos pendant 10 minutes, 10 ml du surnageant sont dilués avec 50 ml d'eau pure, la quantité de lithium dans le surnageant est mesurée par un procédé de titrage par neutralisation, et la quantité de lithium élué (% en masse) par rapport au matériau actif d'électrode positive entier est calculée.

6. Procédé de production d'un matériau actif d'électrode positive pour batteries rechargeables à électrolyte non aqueux, le procédé comprenant :
mélanger un composé de nickel, un composé de bore et un composé de lithium ; allumer le mélange obtenu par le mélange ;
relier une solution d'enrobage obtenue en dissolvant un alcoxyde de titane dans un solvant à une surface d'une particule d'oxyde composite de lithium-nickel contenant du bore obtenue par l'allumage ; et
sécher l'oxyde composite de lithium-nickel auquel la solution d'enrobage est reliée, dans lequel
la particule d'oxyde composite de lithium-nickel contient du lithium (Li), nickel (Ni), cobalt (Co), un élément M et du bore, et un rapport molaire parmi ces éléments excluant le bore est représenté par Li/Ni/Co/M = s/(1 - x - y)/x/y, dans laquelle 0,95 ≤ s ≤ 1,30, 0,55 ≤ (1 - x - y) ≤ 0,95, 0,05 ≤ x ≤ 0,35, 0 ≤ y ≤ 0,1, et M représente au moins un élément sélectionné parmi le groupe constitué de Mn, V, Mg, Mo, Nb, Ti et Al, et
une teneur en bore est de 0,005 % en masse ou plus et 0,1 % en masse ou moins par rapport à l'oxyde composite de lithium-nickel entier.

7. Procédé de production d'un matériau actif d'électrode positive pour batteries rechargeables à électrolyte non aqueux selon la revendication 6, dans lequel la solution d'enrobage contient un produit obtenu en hydrolysant l'alcoxyde de titane.

8. Procédé de production d'un matériau actif d'électrode positive pour batteries rechargeables à électrolyte non aqueux selon la revendication 7, dans lequel l'hydrolyse est réalisée en ajoutant de l'eau pure à une solution d'enrobage obtenue en dissolvant l'alcoxyde de titane dans un solvant et agitant le mélange résultant à température ambiante.

9. Procédé de production d'un matériau actif d'électrode positive pour batteries rechargeables à électrolyte non aqueux selon l'une quelconque des revendications 6 à 8, dans lequel le composé de nickel est au moins un sélectionné parmi le groupe constitué de l'hydroxyde de nickel et l'oxyde de nickel.

10. Procédé de production d'un matériau actif d'électrode positive pour batteries rechargeables à électrolyte non aqueux selon l'une quelconque des revendications 6 à 9, dans lequel le composé de lithium est au moins un sélectionné parmi le groupe constitué de l'hydroxyde de lithium, l'oxyde de lithium, le nitrate de lithium, le chlorure de lithium et le sulfate de lithium.

11. Procédé de production d'un matériau actif d'électrode positive pour batteries rechargeables à électrolyte non aqueux selon l'une quelconque des revendications 6 à 10, dans lequel le composé de bore est au moins un sélectionné parmi le groupe constitué de l'acide borique (H₃BO₃), l'oxyde de bore (B₂O₃) et le métaborate de lithium (LiBO₂).

12. Procédé de production d'un matériau actif d'électrode positive pour batteries rechargeables à électrolyte non aqueux selon l'une quelconque des revendications 6 à 11, dans lequel l'alcoxyde de titane est au moins un sélectionné parmi le groupe constitué du tétraéthoxyde de titane (Ti(OC₂H₅)₄), tétrapropoxyde de titane (Ti(OC₃H₇)₄) et tétrabutoxyde de titane (Ti(OC₄H₉)₄).

13. Procédé de production d'un matériau actif d'électrode positive pour batteries rechargeables à électrolyte non aqueux selon l'une quelconque des revendications 6 à 12, dans lequel l'allumage est réalisé dans une atmosphère d'oxygène à une température d'allumage de 700 °C ou supérieure et 800 °C ou inférieure.

14. Procédé de production d'un matériau actif d'électrode positive pour batteries rechargeables à électrolyte non aqueux selon l'une quelconque des revendications 6 à 13, le procédé comprenant en outre traiter thermiquement l'oxyde composite de lithium-nickel séché dans une atmosphère d'oxygène à une température de 150 °C ou supérieure et 500 °C ou inférieure.

15. Procédé de production d'un matériau actif d'électrode positive pour batteries rechargeables à électrolyte non aqueux selon l'une quelconque des revendications 6 à 14, dans lequel
une teneur en titane dans la couche d'enrobage est de 0,01 % en masse ou plus et 0,15 % ou moins par rapport au matériau actif d'électrode positive entier.

16. Batterie rechargeable à électrolyte non aqueux, comprenant : une électrode positive ; une électrode négative ; et un électrolyte non aqueux, dans laquelle l'électrode positive inclut le matériau actif d'électrode positive selon l'une quelconque des revendications 1 à 5.
